(19) Europäisches Patentamt / European Patent Office / Office européen des brevets

(11) **EP 4 112 554 A1**

(12) **EUROPEAN PATENT APPLICATION**
published in accordance with Art. 153(4) EPC

(43) Date of publication:
**04.01.2023 Bulletin 2023/01**

(21) Application number: **21776249.1**

(22) Date of filing: **24.03.2021**

(51) International Patent Classification (IPC):
*C01F 17/32* (2020.01)    *B01J 23/34* (2006.01)
*C01F 17/235* (2020.01)    *C01G 45/00* (2006.01)

(52) Cooperative Patent Classification (CPC):
**B01J 23/34; C01F 17/235; C01F 17/32;
C01G 45/00**

(86) International application number:
**PCT/JP2021/012413**

(87) International publication number:
**WO 2021/193774 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020 JP 2020057649**

(71) Applicant: **Nippon Kayaku Kabushiki Kaisha
Tokyo 100-0005 (JP)**

(72) Inventors:
- **KAWAMURA Tomoyuki
  Tokyo 100-0005 (JP)**
- **NAKANO Takanori
  Sanyoonoda-shi, Yamaguchi 757-8686 (JP)**
- **ABE Masahiro
  Sanyoonoda-shi, Yamaguchi 757-8686 (JP)**

(74) Representative: **Gille Hrabal
Partnerschaftsgesellschaft mbB
Patentanwälte
Brucknerstraße 20
40593 Düsseldorf (DE)**

(54) **HETEROMETALLIC DOPED CERIUM OXIDE AND PRODUCTION METHOD THEREFOR**

(57)    The present disclosure relates to a dissimilar metal-doped cerium oxide including cerium oxide and a dissimilar metal other than the cerium oxide, in which a relationship of the following formula (1) is satisfied:

$$0.8 \leq |(D90)-(D10)|/D50 \leq 2.0 \quad (1)$$

(in the formula (1), D10, D50, and D90 respectively represent the following:
D10: particle diameter at which cumulative volume fraction is 10%
D50: particle diameter at which cumulative volume fraction is 50%
D90: particle diameter at which cumulative volume fraction is 90%).

EP 4 112 554 A1

**Description**

TECHNICAL FIELD

The present invention relates to cerium oxide doped with a dissimilar metal and a method for producing the same. More specifically, the present invention relates to dissimilar metal-doped cerium oxide particles and a method for producing the same. The dissimilar metal-doped cerium oxide particles are particularly suitable for use as a catalyst since the particles have high fluidity.

BACKGROUND ART

Inorganic materials containing cerium oxide as a main component have high heat resistance, remarkable oxygen storage and release capacity, and the like, and are therefore industrially widely used in various applications such as catalysts for reforming reactions and hydrogen production, catalyst carriers, coating materials for photocatalysts, gas sensors, and solid electrolytes for fuel cells. Among these, spherical particles containing cerium oxide as a main component have been proposed for many applications from a viewpoint of convenience as a material.

In these applications specific to cerium oxide, it is considered that one problem is improvement of fluidity. For example, in the case of using cerium oxide as a catalyst, improvement in productivity can be expected by improving the fluidity. However, a technique for improving fluidity of cerium oxide particles has not been sufficiently studied. Here, the fluidity of cerium oxide or the like refers to an amount of blown gas or a degree of gas pressure required to cause particles to flow on a fluidized bed or the like.

Patent Literature 1 describes a method in which spherical cerium oxide is generally obtained by mixing a cerium salt and another metal salt required for adding a function in an aqueous system and adding oxalate thereto to obtain a precipitate. Patent Literature 2 describes a method of adding ammonia or ammonium carbonate as a precipitant. Patent Literature 3 describes a method of forming a precipitate using an alkoxide. In addition, Patent Literature 4 describes a method of obtaining a precipitate by adding an alkali.

However, the use of oxalate causes, in a precalcination step, a disadvantage that a large mass of aggregates is likely to form. In the case of using ammonia or ammonium carbonate, it has been reported that remaining of an ammonia component is likely to cause a spherical substance to be a columnar substance in the precalcination step. In addition, an alkoxide itself is expensive and is low in practicality, and a coprecipitation method using an alkali also has many practical problems such as low recovery rate and residue treatment.

CITATION LIST

PATENT LITERATURE

Patent Literature 1: JP 2003-514745 A
Patent Literature 2: Japanese Patent No. 3793802
Patent Literature 3: JP 2007-153731 A
Patent Literature 4: JP 2010-089989 A

SUMMARY OF INVENTION

TECHNICAL PROBLEM

As in the background art described above, there is a demand for studies on improvement of fluidity of cerium oxide particles.

In synthesis of spherical cerium oxide mainly based on a coprecipitation method, there is room for many improvements from a viewpoint of industrial production, such as maintenance of a spherical shape, cost, treatment of a solvent or a residue after precipitation is formed, and there is a demand for an inexpensive and highly efficient method for producing oxide particles mainly based on uniform cerium.

In particular, in the synthesis, it is very important to prevent breakage of the spherical shape at the time of precalcination and to obtain uniform particles. A ratio of the breakage determines an amount of a raw material required for production and greatly affects a production cost, and thus, there is a demand for improvement of the ratio of the breakage in particular. In addition, it is considered that it is difficult to reuse a by-product that has once been converted into an oxide through a calcination step by continuing the production at a low recovery rate. Further, the breakage of the spherical shape causes a large load to a subsequent step such as screening for selectively removing a damaged fragment, and this results in problems such as an increase in time required for the step and an increase in cost of operating equipment.

Various methods mainly using the coprecipitation method have been proposed as recent production techniques. One of the methods is generating a precipitate by adding an acid, ammonia, ammonium carbonate, alkoxide, an alkaline aqueous solution, or the like to an aqueous solution mainly containing cerium and recovering the precipitate. However, in view of use and treatment of a large amount of solvents or additives, it is practically more efficient and preferable to continuously dry a cerium mixed solution by a dryer such as a spray dryer and perform the precalcination. In this case, it is known to a person skilled in the art that a moisture-proof agent (for example, ammonium nitrate) for preventing moisture absorption of a dry powder is used between a drying step and the precalcination step.

In the spray drying of the solution, the spherical shape after the precalcination cannot be maintained unless a laminate is as thin as several millimeters at the time of the precalcination. It is considered that the reason for the above is an ammonium salt to be added for preventing moisture absorption of a dried body, but the details thereof are unclear.

As a result of intensive studies on these current situations and problems described above, inventors of the present application have found that a dissimilar metal-doped cerium oxide having a specific particle size distribution parameter has specific properties and solves the problems including the fluidity. In addition, it has been also found that when an amount of the ammonium salt is large, nitrate remaining in the drying step melts and decomposes at a relatively low temperature during a temperature rise at the time of the precalcination, and thus the spherical shape cannot be maintained. Regarding the breakage of the spherical shape accompanied by this phenomenon, as a thickness of the dried product to be laminated increases, a pressure applied to a sample increases and the melting and decomposition are accelerated, and thus the calcination step cannot be completed unless the laminate is thin.

In addition, the inventors of the present application have found that, from a viewpoint of high efficiency, it is possible to prepare an oxide mainly containing cerium with high efficiency with a target particle shape maintained even when the lamination thickness is set to several centimeters in the precalcination step, by performing the spray drying of continuously drying a preparation liquid without forming a precipitate unlike the coprecipitation method, or a drying step equivalent thereto, and by limiting an addition of a salt that is easily to melt at a low temperature to a specific range in order to maintain a spherical shape of particles.

SOLUTION TO PROBLEM

That is, the present invention relates to the following 1) to 14).

1) A dissimilar metal-doped cerium oxide including:

cerium oxide and a dissimilar metal other than the cerium oxide,
in which a relationship of the following formula (1) is satisfied:

$$0.8 \le |(D90)\text{-}(D10)|/D50 \le 2.0 \quad (1)$$

where, in the formula (1), D10, D50, and D90 respectively represent the following:

D10: particle diameter at which cumulative volume fraction is 10%
D50: particle diameter at which cumulative volume fraction is 50%
D90: particle diameter at which cumulative volume fraction is 90%.

2) A dissimilar metal-doped cerium oxide including:

cerium oxide and a dissimilar metal other than the cerium oxide,
in which a bulk specific gravity is 0.51 g/cc or more and 1.50 g/cc or less.

3) The dissimilar metal-doped cerium oxide according to the above 1) or 2), in which D10 is 20 $\mu$m or more and 40 $\mu$m or less.

4) The dissimilar metal-doped cerium oxide according to any one of the above 1) to 3), in which D90 is 60 $\mu$m or more and 120 $\mu$m or less.

5) The dissimilar metal-doped cerium oxide according to any one of the above 1) to 4), in which the dissimilar metal is at least one metal selected from the group consisting of manganese (Mn), cobalt (Co), iron (Fe), and nickel (Ni).

6) A method for producing a dissimilar metal-doped cerium oxide including:

(A) preparing an aqueous preparation by blending a raw material, (B) drying the aqueous preparation, and (C) calcining a dried product of the aqueous preparation,
in which the raw material prepared in the step (A) satisfies a relationship of the following formula (2):

$$0.65 \leq (a+b)/c \leq 8.0 \quad (2)$$

where, in the formula (2), a to c represent the following:

a: amount of substance of cerium (Ce) in raw material (mol)
b: amount of substance of dissimilar metal other than cerium in raw material (mol)
c: amount of substance of ammonium ion in moisture-proof agent (mol).

7) The method for producing a dissimilar metal-doped cerium oxide according to the above 6),
in which the raw material prepared in the step (A) satisfies a relationship of the following formula (2'):

$$0.7 \leq (a+b)/c \leq 8.0 \quad (2').$$

8) The method for producing a dissimilar metal-doped cerium oxide according to the above 6) or 7),
in which the raw material prepared in the step (A) satisfies a relationship of the following formula (3):

$$0.8 \leq (a+b)/c \leq 7.0 \quad (3).$$

9) The method for producing a dissimilar metal-doped cerium oxide according to any one of the above 6) to 8), in which c and b in the formula (2) or (3) satisfy a relationship of the following formula (4):

$$0.10 \leq b/c \leq 0.80 \quad (4).$$

10) The method for producing a dissimilar metal-doped cerium oxide according to any one of the above 6) to 9), in which the drying in the step (B) is spray drying.

11) The method for producing a dissimilar metal-doped cerium oxide according to any one of the above 6) to 10), in which an organic acid salt is used as a raw material of the dissimilar metal.

12) The method for producing a dissimilar metal-doped cerium oxide according to the above 11), in which the organic acid salt is an acetate.

13) A catalyst for producing hydrogen containing the dissimilar metal-doped cerium oxide according to any one of the above 1) to 5).

14) A method for producing hydrogen using the catalyst for producing hydrogen according to the above 13).

ADVANTAGEOUS EFFECTS OF INVENTION

The present invention allows for providing heterogeneous doped cerium oxide that is excellent in fluidity and improves productivity and working efficiency particularly when used as a catalyst. In addition, the production method of the present invention allows for achieving an efficient calcination allowing the particle diameter to be uniform, allowing the high recovery rate, and allowing for thick particles, in the production of the spherical oxide particles containing a corresponding cerium as a main component using a cerium salt and another metal salt as raw materials.

DESCRIPTION OF EMBODIMENTS

[Dissimilar Metal-doped Cerium Oxide]

The present invention relates to a dissimilar metal-doped cerium oxide.
The cerium oxide is metal oxide represented by $CeO_2$, and is also represented as ceria.
The dissimilar metal is not limited as long as the dissimilar metal is a metal other than Ce (cerium), and for example, transition metals such as Ti, V, Cr, Fe, Co, Ni, Cu, Zn, Zr, Nb, Mn, W, Sb, Sn, Mg, Si, Al, Ti, and P can be used. Among those, the dissimilar metal is preferably manganese (Mn), cobalt (Co), iron (Fe), and nickel (Ni), more preferably Mn and Co, and particularly preferably Mn.
In the present specification, the dissimilar metal-doped cerium oxide may be simply represented as the cerium oxide.

[Formula (1)]

Cerium oxide according to an embodiment of the present invention satisfies a relationship of the following formula (1):

$$0.8 \leq |(D90)\text{-}(D10)|/D50 \leq 2.0 \quad (1)$$

In the above formula (1), D10 represents a particle diameter at which a cumulative volume fraction is 10%, D50 represents a particle diameter at which the cumulative volume fraction is 50%, and D90 represents a particle diameter at which the cumulative volume fraction is 90%. That is, the formula (1) is a formula that expresses non-uniformity of particles.
A lower limit in the formula (1) of the cerium oxide according to an embodiment of the present invention is 0.8, and more preferably 0.85, 0.9, 0.95, and 1.0 in this order. An upper limit in the formula (1) of the cerium oxide is 2.0, and more preferably 1.8, 1.7, 1.6, 1.5, and 1.4 in this order. That is, the most preferable range of |(D90)-(D10)|/D50 in the formula (1) is 1.0 or more and 1.4 or less.
In the cerium oxide according to an embodiment of the present invention, the above D10 is preferably 20 μm or more and 40 μm or less. A lower limit of D10 is more preferably 21 μm, 22 μm, 23 μm, and 24 μm in this order. An upper limit of D10 is more preferably 38 μm, 35 μm, 33 μm, and 30 μm in this order. That is, D10 is most preferably 24 μm or more and 30 μm or less.
The above D50 is preferably 40 μm or more and 65 μm or less. A lower limit of D50 is more preferably 42 μm, 44 μm, and 45 μm in this order. An upper limit of D50 is more preferably 60 μm, 58 μm, and 53 μm in this order. That is, D50 is most preferably 45 μm or more and 53 μm or less.
The above D90 is preferably 60 μm or more and 120 μm or less. A lower limit of D90 is more preferably 65 μm, 70 μm, 75 μm, and 80 μm in this order. An upper limit of D90 is more preferably 115 μm, 110 μm, 105 μm, and 100 μm in this order. That is, D90 is most preferably 80 μm or more and 100 μm or less.
In addition, D10, D50, and D90 can be measured under a wet condition using, for example, LMS-2000e USER manufactured by Seishin Enterprise Co., Ltd. For measurement conditions in examples to be described later, a measurement was performed under the conditions that water was used as a dispersion medium, a range of scattered light was 10% to 20%, a standard of a measurement time was 3 seconds, the number of snaps was 3,000, and ultrasonic waves were not irradiated.
In addition, for use as a catalyst or the like on a fluidized bed, the particles become small over time and are uniformly miniaturized until the catalyst reaches the lifetime. Thus, when the particle diameter is less than 20 μm, the lifetime tends to be shortened. When the particle diameter is more than 150 μm, the fluidity is lowered. For this reason, in addition to uniformity, the particles of the dissimilar metal-doped cerium oxide typically preferably have a particle size distribution in a range of 20 μm or more and 150 μm or less.

[Bulk Specific Gravity]

The cerium oxide according to an embodiment of the present invention has a bulk specific gravity of 0.51 g/cc or more and 1.50 g/cc or less. The bulk specific gravity is important, for example, when the cerium oxide is fluidized and used. When the bulk specific gravity is too small, a charged amount per predetermined volume decreases and efficiency of a reaction decreases. Thus, this may increase a running cost. Contrary, when the bulk specific gravity is too large, a speed and a pressure of a fluid necessary for the fluidization increase, and this similarly causes an increase in the running cost.

A lower limit of the bulk specific gravity is more preferably 0.53 g/cc, 0.55 g/cc, 0.58 g/cc, and 0.60 g/cc in this order. An upper limit of the bulk specific gravity is more preferably 1.40 g/cc, 1.30 g/cc, 1.20 g/cc, and 1.10 g/cc in this order. That is, the bulk specific gravity is most preferably 0.60 g/cc or more and 1.10 g/cc or less.

A bulk density can be calculated by charging a sample into a measuring cylinder having a capacity of 10 cc, applying a vibration to the measuring cylinder, charging a 4.2 cc sample densely without void, and then measuring the charged weight.

The dissimilar metal-doped cerium oxide according to an embodiment of the present invention satisfies the following formula (i) as a composition.

$$Ce_{1-x}M_xO_{2-y} \qquad (i)$$

In the formula (i), x is 0.03 or more and 0.40 or less, and y represents a numerical value based on an oxidized state of an oxide. The value of x is more preferably 0.05 or more and 0.35 or less, and still more preferably 0.07 or more and 0.30 or less. In the formula (i), M represents the above-described dissimilar metal elements. x represents an amount of M when a sum of an amount of Ce and an amount of M contained in the catalyst is 1.

The dissimilar metal-doped cerium oxide according to an embodiment of the present invention has uniform particles and a large sample weight per minimum flow rate, and thus, the dissimilar metal-doped cerium oxide is particularly useful for the hydrogen production for use on a fluidized bed. In the hydrogen production, a catalytic reaction process for decomposing water has been developed, and the hydrogen production is carried out by a step of reducing cerium oxide at a high temperature to release oxygen and reacting the cerium oxide with water at a high temperature on a fluidized bed. In the use on the fluidized bed, a flow of the particles is uniform for the uniform particles as in the present invention, and thus, a flow of a reaction gas is also uniform and has a high efficiency. In addition, the particles become small over time and are uniformly miniaturized until the catalyst reaches the lifetime, and thus, stable operation can be performed for a long period of time. Further, a sample amount with respect to the minimum flow rate is large in the dissimilar metal-doped cerium oxide according to an embodiment of the present invention, and this allows a large number of catalyst particles to be used under a condition that a gas flow rate and a pressure necessary for the flow are fixed. Thus, this increases the efficiency of the reaction and allows for minimization of a reactor, reduction of a reaction temperature, and the like.

[Production Steps (A) to (C)]

A method for producing a dissimilar metal-doped cerium oxide according to an embodiment of the present invention includes: (A) preparing an aqueous preparation by blending a raw material, (B) drying the aqueous preparation, and (C) calcining a dried product of the aqueous preparation. However, the steps are not limited to (A) to (C), and other steps may be performed as appropriate.

<Step (A)>

The step (A) is a step of preparing an aqueous preparation (aqueous solution or aqueous slurry) by blending a raw material.

In general, a starting material of each element constituting metal-added cerium oxide is not limited. As a raw material of a cerium component, an oxide of cerium such as cerium oxide, a salt such as cerate, cerium acetate, cerium carbonate, cerium hydroxide, ammonium cerium nitrate, or the like can be used, and cerium nitrate is preferably used. The use of cerium nitrate allows for achieving good operability and good particle size distribution from a viewpoint of solubility and exhaust gas treatment. In an example of an added metal, as raw material of a manganese component, a nitrate, a carbonate, an organic acid salt, hydroxide, or the like such as manganese nitrate, manganese sulfate, and manganese acetate, or a mixture of these can be used. A salt, manganese oxide, metal manganese, and the like can be used. As a metal raw material, an organic acid salt is preferably used, and an acetate is most preferably used. For an addition of another metal, the use of a salt having a high melting temperature such as an organic acid salt allows for more suitably preparing an oxide mainly containing cerium with high efficiency with a desired particle shape maintained even when the lamination thickness is set to several centimeters in the precalcination step. For example, in the case of using manganese, an organic acid salt such as manganese acetate is more preferable, and the use of the organic acid salt allows for the good operability, an increase in the recovery rate of the dried body, and a uniform particle size distribution after calcination. In the preparation, it is important to completely dissolve all the raw materials in distilled water, regardless of an order of addition of the raw materials and the like. A temperature during the preparation is preferably 10°C to 100°C, and more preferably 20°C to 90°C. The temperature is more preferably 30°C to 80°C. In the present specification, the word "to" includes numerical values before and after.

Specific examples of the step (A) include the following. However, the step (A) is not limited to this description.

Cerium nitrate hexahydrate is dissolved in distilled water maintained at 10°C to 100°C while the mixture is heated and stirred to obtain an aqueous solution of the cerium nitrate. After complete dissolution of the cerium nitrate hexahydrate is confirmed in the aqueous solution, manganese acetate tetrahydrate is added and dissolved in the aqueous solution, and complete dissolution of the manganese acetate is confirmed. Thereafter, ammonium nitrate is dissolved in the resultant aqueous solution to obtain an aqueous preparation of raw materials.

For a stirring power of the heating and stirring, a lower limit of the stirring power of the heating and stirring is preferably 0.01 kW/m$^3$, 0.10 kW/m$^3$, 0.15 kW/m$^3$, and 0.20 kW/m$^3$ in this order, and an upper limit of the stirring power of the heating and stirring is preferably 1.50 kW/m$^3$, 1.00 kW/m$^3$, and 0.75 kW/m$^3$ in this order. That is, the most preferable range is 0.20 kW/m$^3$ or more and 0.75 kW/m$^3$ or less.

For a liquid viscosity of the aqueous preparation, a lower limit of the liquid viscosity of the aqueous preparation is preferably 0.01 cP, 0.1 cP, 0.5 cP, and 1 cP in this order, and an upper limit of the liquid viscosity of the aqueous preparation is preferably 1000 cP, 500 cP, 100 cP, 50 cP, 10 cP, and 5 cP in this order. That is, the most preferable range is 1 cP or more and 5 cP or less.

Further, for a time from a completion of the step (A) to a transition to the next step, a lower limit of the time from a completion of the step (A) to a transition to the next step is preferably 1 minute, 5 minutes, 10 minutes, and 30 minutes in this order, and an upper limit of the time from a completion of the step (A) to a transition to the next step is preferably 1 month, 15 days, 7 days, 3 days, 1 day, and 10 hours in this order. That is, the most preferable range is 30 minutes or longer and 10 hours or shorter.

Further, when an index indicating a moisture content in the above aqueous preparation is expressed by a solid content, a lower limit of the solid content is preferably 10% by weight, 20% by weight, and 30% by weight in this order, and an upper limit of the solid content is preferably 80% by weight, 70% by weight, and 60% by weight in this order. That is, the most preferable range is 30% by weight to 60% by weight. Here, a solid weight refers to a solid component of an agent to be charged, and a weight of water of adhesion and water of crystallization contained in the agent is calculated as moisture.

<Regarding Step (B)>

The step (B) is a step of drying the aqueous preparation prepared in the step (A).

Through this step, the above aqueous preparation is made into a dry powder. A drying method is not limited as long as the method is capable of completely drying the aqueous preparation, but examples thereof include drum drying, freeze drying, spray drying, and evaporation to dryness. Among these, in an embodiment of the present invention, spray drying capable of drying a slurry into powder or granules in a short time is particularly preferable. A drying temperature of the spray drying varies depending on a concentration of the slurry, a liquid feeding speed, and the like, but a temperature at an inlet of the dryer is typically preferably 150°C to 350°C and a temperature at an outlet is typically preferably 70°C to 250°C. In addition, the drying is preferably performed such that an average particle diameter of the dry powder obtained in this case is 10 μm to 500 μm. In the present specification, the spray drying includes a method similar to the spray drying such as a jet turbo dryer, a flash jet dryer, a spray pyrolyzer, or the like.

An upper limit of the temperature at the inlet in the spray drying is more preferably 330°C, and still more preferably 310°C. A lower limit of the temperature at the inlet is more preferably 170°C, and still more preferably 190°C. Therefore, a particularly preferable range is 190°C to 310°C.

An upper limit of the temperature at the outlet in the spray drying is preferably 200°C, more preferably 180°C, still more preferably 160°C, and still more preferably 150°C. A lower limit of the temperature at the outlet is more preferably 80°C, and still more preferably 90°C. Therefore, a particularly preferable range is 90°C to 150°C. A residence time of the dry powder in a drying device in the spray drying is preferably 1 second to 3 minutes, more preferably 5 seconds to 1 minute, still more preferably 7 seconds to 45 seconds, and most preferably 10 seconds to 30 seconds.

An upper limit of the average particle diameter of the dry powder is more preferably 480 μm, and still more preferably 460 μm. The upper limit of the average particle diameter is preferably 500 μm, 480 μm, 460 μm, 300 μm, 200 μm, and 150 μm in this order. A lower limit of the average particle diameter is more preferably 20 μm, and still more preferably 40 μm. Therefore, a particularly preferable range is 40 μm to 150 μm. An average particle diameter is determined by measuring a particle diameter distribution using a laser diffraction scattering particle size distribution analyzer (trade name "LMS-2000e", manufactured by Seishin Enterprise Co., Ltd.) and calculating a volume average (median diameter D50) of the particle diameter distribution.

In order to realize the average particle diameter, in the case of rotary type spray drying, it is preferable to optimize the number of revolutions of a sprayer (atomizer). Revolution of the atomizer varies depending on a composition of a catalyst precursor, but the number of revolutions of the atomizer is preferably 8,000 rpm or more and 17,000 rpm or less. An upper limit of the number of revolutions of the atomizer is more preferably 16,500 rpm, particularly preferably 16,000 rpm, and most preferably 15,500 rpm. A lower limit of the number of revolutions of the atomizer is more preferably 8,500 rpm, particularly preferably 9,000 rpm, and most preferably 9,500 rpm. That is, the most preferable range of the number of revolutions of the atomizer is 9,500 rpm or more and 15,500 rpm or less. The number of revolutions is also expressed by relative centrifugal acceleration, and the relative centrifugal acceleration is preferably 2,000 G or more and 30,000 G or less. In the case of a nozzle type spray drying, a known technique can be applied in order to achieve the above average particle diameter, and the nozzle type spray drying of the present invention includes use of any gas, any gas-liquid flow rate ratio, and any nozzle shape.

Further, for a time from a completion of the step (B) to a transition to the next step, a lower limit of the time from a completion of the step (B) to a transition to the next step is preferably 1 minute, 5 minutes, 10 minutes, and 30 minutes in this order, and an upper limit of the time from a completion of the step (B) to a transition to the next step is preferably 1 month, 15 days, 7 days, 3 days, 1 day, and 10 hours in this order. That is, the most preferable range is 30 minutes or longer and 10 hours or shorter.

< Step (C)>

The step (C) is a step of calcining the dry powder obtained in the step (B).

As for the calcination, unnecessary salts such as nitrates can be removed by calcining at 250°C to 700°C, preferably at 250°C to 600°C under an air flow. A calcination time is preferably 1 hour to 12 hours, and a temperature rising rate is preferably 0. 1°C/min to 10°C/min, and more preferably 0.5°C/min to 5°C/min. Thus, a precalcined powder is obtained. For the precalcination, a tunnel furnace, a muffle furnace, a box-shaped calcination furnace, or the like can be used, and further, a calcination device such as a rotary kiln can also be used.

For an atmosphere during the calcination, air is convenient and preferable as a gas to be circulated, but other inert gases such as nitrogen, carbon dioxide, a gas for forming a reducing atmosphere such as a nitrogen oxide-containing gas, an ammonia-containing gas, and a hydrogen gas, and a mixture of these can be used. An absolute humidity of the circulated gas during the calcination is preferably 0.0001 kg/kgDA to 0.02 kg/kgDA, more preferably 0.0001 kg/kgDA to 0.015 kg/kgDA, and still more preferably 0.0001 kg/kgDA to 0.01 kg/kgDA.

< Other Steps>

In the method for producing a dissimilar metal-doped cerium oxide of the present invention, in addition to the above (A) to (C), a molding step, a main calcination step, or the like can be performed.

As the molding step, any molding method of carrying molding of carrying a product on a carrier such as silica and non-carrying molding in which a carrier is not used can be adopted. Specific examples of the molding method include tablet molding, press molding, extrusion molding, and granulation molding. As a shape of a molded product, for example, a columnar shape, a ring shape, a spherical shape or the like can be appropriately selected in consideration of an operating condition. A carried catalyst in which a catalytically active component is carried on a spherical carrier, particularly an inert carrier such as silica or alumina, and having the average particle diameter of 3.0 mm or more and 10.0 mm or less, and preferably 3.0 mm or more and 8.0 mm or less, is preferably used. As a carrying method, a rolling granulation, a method using a centrifugal flow coating device, a wash coating, and the like are widely known, and the carrying method is not limited as long as the precalcined powder can be uniformly carried on the carrier in the carrying method. However, the rolling granulation is preferable in view of production efficiency of the catalyst. Specifically, in the rolling granulation, a disk is rotated at a high speed in a device having a flat or uneven disk at the bottom of a fixed cylindrical container, and this causes the carrier charged in the container to vigorously stirred by repetition of a spinning motion of the carrier itself and a revolving motion. And then, the precalcined powder is added to the device to carry a powder component on the carrier.

A binder is preferably used at the time of carrying. Specific examples of the binder that can be used include water, ethanol, methanol, propanol, a polyhydric alcohol, polyvinyl alcohol as a polymer binder, and a silica sol aqueous solution as an inorganic binder. Ethanol, methanol, propanol, and a polyhydric alcohol are preferred, a diol such as ethylene glycol and a triol such as glycerin is more preferred, and an aqueous solution having a concentration of glycerin of 5 mass% or more is still more preferred. Using an appropriate amount of a glycerin aqueous solution improves the moldability and allows for providing a high-performance catalyst having high mechanical strength. The amount of the binder to be used is usually 2 parts by mass to 60 parts by mass with respect to 100 parts by mass of a precalcined powder, and the amount of the glycerin aqueous solution is preferably 15 parts by mass to 50 parts by mass. In the carrying, the binder and the precalcined powder may be alternately or simultaneously supplied to a molding machine. In addition, in the molding, a small amount of a known additive such as graphite and talc may be added. None of a molding aid, a pore forming agent, and a carrier to be added in the molding is considered as a constituent element of an active component in the present invention, regardless of the presence of activity in the sense of converting the raw material into any other product.

A purpose of the main calcination is to improve stability of particles and increase purity as an oxide by performing the treatment at a temperature higher than that of the precalcination. As for a temperature range in the main calcination, the calcination can be performed at a maximum temperature of 600°C to 2,000°C, preferably 700°C to 1,500°C under an air flow. The calcination time is preferably 1 hour to 40 hours, and a temperature rising rate is preferably 0.1°C/min to 10°C/min, and more preferably 0.5°C/min to 5°C/min.

For an atmosphere during the main calcination, air is convenient and preferable as a gas to be circulated, but other inert gases such as nitrogen, carbon dioxide, a gas for forming a reducing atmosphere such as a nitrogen oxide-containing gas, an ammonia-containing gas, and a hydrogen gas, and a mixture of these can be used. An absolute humidity of the circulated gas during the calcination is preferably 0.0001 kg/kgDA to 0.02 kg/kgDA, more preferably 0.0001 kg/kgDA to 0.015 kg/kgDA, and still more preferably 0.0001 kg/kgDA to 0.01 kg/kgDA.

[Formula (2)]

In the method for producing a dissimilar metal-doped cerium oxide according to an embodiment of the present invention, the raw material to be used in the step (A) satisfies a relationship of the following formula (2):

$$0.65 \leq (a+b)/c \leq 8.0 \quad (2)$$

where, in the formula (2), a to c represent the following:

a: amount of substance of cerium (Ce) in raw material (mol)
b: amount of substance of dissimilar metal other than cerium in raw material (mol)
c: amount of substance of ammonium ion in moisture-proof agent (mol).

When the raw material to be used in the step (A) satisfies a relationship of the formula (2), the particle size distribution of the particles after drying can be controlled, and further, it is expected that recovery efficiency is improved by reducing adhesion or the like in the drying step, and that no change occurs in quality even when the calcining is performed under conditions of the lamination in a few centimeters order in the calcination step. When this value is too small, adhesion occurs in a dryer, and thus a sufficient recovery rate of the dried body may not be obtained. Conversely, when this value is too large, the shape of dry particles may not be able to maintain a spherical shape.

Here, a to c represent the following.

a: amount of substance of cerium (Ce) in raw material (mol)

The amount of substance of cerium in the raw material means a content of cerium in a compound containing cerium to be used as the raw material. For example, when 1,667.7g of cerium nitrate hexahydrate is used as the raw material, a is 3.838 mol.

b: amount of substance of metal other than cerium in raw material (mol)

The amount of substance of the metal other than cerium in the raw material means a content of the metal other than cerium in a compound containing the metal other than cerium to be used as the raw material. For example, when 141.1g of manganese acetate tetrahydrate is used as the raw material, the amount of substance means a content of manganese, and b is 0.576 mol. When 206.1g of a 50 mass% manganese nitrate aqueous solution is used as the raw material, b is 0.576 mol.

c: amount of substance of ammonium ion in moisture-proof agent (mol)

This is an amount of substance of the moisture-proof agent to be used as the raw material. As the moisture-proof agent, ammonium nitrate is typically used, but other salts can also be used. Examples thereof include ammonium carbonate, ammonium chloride, ammonium acetate, and ammonium hydroxide (aqueous ammonia). Preferably, ammonium nitrate is used, which has high efficacy and high convenience.

In the method for producing a dissimilar metal-doped cerium oxide of the present invention, (a+b)/c in the above formula (2) is preferably in a specific range, for the raw material to be used in the step (A). When (a+b)/c expressed in the above formula (2) is too low, the recovery rate of dried granules in a drying operation in the step (B) becomes poor, and further, it is disadvantageous and not suitable in terms of cost since a large amount of a moisture-proof agent is used. On the other hand, when (a+b)/c is too high, the effect of the moisture-proof agent deteriorates and the recovery rate of the dry granules tends to decrease. Therefore, an upper limit of (a+b)/c in the above formula (2) is preferably 20, 10, 8, and 7 in this order, and is particularly preferably 5. A lower limit of (a+b)/c in the above formula (2) is preferably 0.5, 0.65, 0.7, 0.8, 1.2, and 1.3 in this order, and is particularly preferably 1.5. A range of (a+b)/c is preferably 0.7 to 8.0, more preferably 0.8 to 7.0, and most preferably 1.5 to 5.

In the method for producing a dissimilar metal-doped cerium oxide of the present invention, the raw material to be used in the step (A) preferably satisfies the following formula (4). When b/c expressed in the formula (4) is too low, the recovery rate of the dried granules in the drying operation in the step (B) becomes poor, and further, it is disadvantageous and not suitable in terms of cost since a large amount of a moisture-proof agent is used. On the other hand, when b/c is too high, the effect of the moisture-proof agent deteriorates and the recovery rate of the dry granules tends to decrease.

$$0.10 \leq b/c \leq 0.80 \qquad (4).$$

An upper limit of b/c in the above formula (4) is more preferably 0.80, still more preferably 0.60, particularly preferably 0.50, and most preferably 0.40. A lower limit of b/c in the above formula (4) is more preferably 0.10, still more preferably 0.15, particularly preferably 0.20, and most preferably 0.25. Therefore, a range of b/c is most preferably 0.25 to 0.40.

Preferred ranges of the above a to c are as follows. However, values of a, b, and c described below in this section are values when an amount of distilled water to be charged during raw material charging in the preparation step (A) is 1,500 parts by mass, and the values may be adjusted in consideration of a ratio of the raw material to the distilled water according to a scale as appropriate.

a is preferably 1.0 mol or more and 10 mol or less. A lower limit of a is more preferably 2.0 mol and 3.0 mol in this order, and an upper limit of a is more preferably 5.0 mol and 4.0 mol in this order. That is, a is most preferably 3.0 mol or more and 4.0 mol or less.

b is preferably 0.01 mol or more and 1.0 mol or less. A lower limit of b is more preferably 0.1 mol, 0.3 mol, and 0.5 mol in this order, and an upper limit of b is more preferably 0.9 mol, 0.8 mol, and 0.7 mol in this order. That is, b is most preferably 0.5 mol or more and 0.7 mol or less.

c is preferably 0.5 mol or more and 10.0 mol or less. A lower limit of c is more preferably 0.6 mol and 0.7 mol in this order, and an upper limit of c is more preferably 5.0 mol and 4.0 mol in this order. That is, c is most preferably 0.7 mol or more and 4.0 mol or less.

The dissimilar metal-doped cerium oxide obtained by the production method according to an embodiment of the present invention satisfies the following formula (ii) as a composition.

$$Ce_{1-x}M_xO_{2-y} \qquad (ii)$$

In the formula (ii), x is 0.03 or more and 0.40 or less, and y represents a numerical value based on the oxidized state of an oxide. The value of x is more preferably 0.05 or more and 0.35 or less, and still more preferably 0.07 or more and 0.30 or less. In the formula (ii), M represents the above-described dissimilar metal elements. x represents an amount of M when a sum of an amount of Ce and an amount of M contained in the catalyst is 1.

The dissimilar metal-doped cerium oxide produced by the production method according to an embodiment of the present invention has a uniform particle size distribution. Further, in the dissimilar metal-doped cerium oxide produced by the production method of the present invention, a content of fine particles having a particle diameter of 10 $\mu$m or less is small. Therefore, for example, the dissimilar metal-doped cerium oxide has excellent characteristics in the following applications.

When the dissimilar metal-doped cerium oxide is used as a general industrial powder, such as a catalyst, a battery material, a sensor material, a pigment, a dispersoid, a cosmetic, or an abrasive, as it is, or used as raw materials of those, the fluidity is improved in the dissimilar metal-doped cerium oxide, and the dissimilar metal-doped cerium oxide is excellent in ease of handling and operability as a powder. Specifically, remaining of powder in a flexible container, a feeder, or a hopper is reduced, and manufacturing losses are reduced. Such operability as a powder can be easily evaluated by a known method, and for example, a known method can be applied as long as an angle of repose, an angle of collapse, or an angle of difference can be evaluated in addition to true density, bulk density, and degree of compression.

In particular, when the dissimilar metal-doped cerium oxide produced by the production method according to an embodiment of the present invention is used as a catalyst, the dissimilar metal-doped cerium oxide is molded and can be used as a catalyst for exhaust gas treatment, a catalyst for producing hydrogen, or the like. The uniform particle size distribution of the dissimilar metal-doped cerium oxide improves performance, and the reduced fine particles prevents discharge from the reactor to the outside of the system, and a stable reaction result can be expected. Hydrogen can be produced by using the above dissimilar metal-doped cerium oxide as a catalyst for producing hydrogen.

When the dissimilar metal-doped cerium oxide produced by the production method according to an embodiment of the present invention is used as a battery material or a sensor material, it is expected that the uniform particle size distribution of the dissimilar metal-doped cerium oxide allows for high density densification and improved conductivity is improved, and the performance can be expected to be improved.

When the dissimilar metal-doped cerium oxide produced by the production method according to an embodiment of the present invention is used as an abrasive, for example, when the dissimilar metal-doped cerium oxide produced by the production method according to an embodiment of the present invention is used as a CMP abrasive for a semiconductor, since the uniform particle size distribution allows for performing polishing in which uniformity of an in-plane unevenness after polishing is improved.

EXAMPLE

Hereinafter, examples will be described by giving specific examples, but the present invention is not limited to the examples as long as it does not depart from the gist of the present invention.

[Example 1]

While 1,500 parts by mass of distilled water was heated to 80°C and stirred, 1,667.7 parts by mass of cerium nitrate hexahydrate was dissolved in the distilled water to obtain an aqueous solution (A1). After complete dissolution in the aqueous solution (A1) was confirmed, 141.1 parts by mass of manganese acetate tetrahydrate was added to the aqueous solution (A1) and dissolved to prepare an aqueous solution (B1). After complete dissolution in the aqueous solution (B1) was confirmed, 150.2 parts by mass of ammonium nitrate was dissolved in the aqueous solution (B1) to prepare an aqueous solution (C1). The aqueous solution (C1) was sequentially mixed while being vigorously stirred, a complete dissolution state was confirmed, and then a dry powder (D1) was obtained from the aqueous solution (C1) using a spray dryer. An inlet temperature of a spray was set to 240°C, an outlet temperature was set to 140°C, and the number of revolutions of the atomizer was 14,000 rpm. A composition ratio of the catalytically active component excluding oxygen in this case was Ce = 100 and Mn = 16 in terms of atomic ratio. An element ratio was measured using an XRF device (Super mini 200 manufactured by Rigaku Corporation) (the same applies hereinafter).

Thereafter, the dry powder was uniformly leveled in a calcining pan made of SUS and having a size of 30 cm × 20 cm and a depth of 4 cm so as to achieve a thickness of 1 mm and 30 mm, and calcination was performed in a step of raising the temperature from 50°C to 300°C at a rate of 1°C/min under an air flow, thereby obtaining precalcined powders (E1-1) and (E1-30). An element composition ratio of the obtained precalcined powders excluding oxygen was Ce = 100 and Mn = 16 in terms of atomic ratio. That is, x in the general formula (i) was 0.138.

[Example 2]

While 1,500 parts by mass of distilled water was heated to 80°C and stirred, 1,667.7 parts by mass of cerium nitrate hexahydrate was dissolved in the distilled water to obtain an aqueous solution (A1). After complete dissolution in the aqueous solution (A1) was confirmed, 141.1 parts by mass of manganese acetate tetrahydrate was added and dissolved in the aqueous solution (A1) to prepare an aqueous solution (B1). After complete dissolution in the aqueous solution (B1) was confirmed, 238.5 parts by mass of ammonium nitrate was dissolved in the aqueous solution (B1) to prepare an aqueous solution (C2). The aqueous solution (C2) was sequentially mixed while being vigorously stirred, a complete dissolution state was confirmed, and then a dry powder (D2) was obtained from the aqueous solution (C2) using a spray dryer. Drying with the spray dryer was performed under the same conditions as in Example 1. A composition ratio of the catalytically active component excluding oxygen in this case was Ce = 100 and Mn = 16 in terms of atomic ratio.

Thereafter, the dry powder was uniformly leveled in a calcining pan made of SUS and having a size of 30 cm × 20 cm and a depth of 4 cm so as to achieve a thickness of 1 mm and 30 mm, and calcination was performed under the same conditions as in Example 1 to obtain precalcined powders (E2-1) and (E2-30). An element composition ratio of the obtained precalcined powders excluding oxygen was Ce = 100 and Mn = 16 in terms of atomic ratio. That is, x in the general formula (i) was 0.138.

[Example 3]

While 1,500 parts by mass of distilled water was heated to 80°C and stirred, 1,667.7 parts by mass of cerium nitrate hexahydrate was dissolved in the distilled water to obtain an aqueous solution (A1). After complete dissolution in the aqueous solution (A1) was confirmed, 141.1 parts by mass of manganese acetate tetrahydrate was added and dissolved in the aqueous solution (A1) to prepare an aqueous solution (B1). After complete dissolution in the aqueous solution (B1) was confirmed, 337.9 parts by mass of ammonium nitrate was dissolved in the aqueous solution (B1) to prepare an aqueous solution (C3). The aqueous solution (C3) was sequentially mixed while being vigorously stirred, a complete dissolution state was confirmed, and then a dry powder (D3) was obtained from the aqueous solution (C3) using a spray dryer. Drying with the spray dryer was performed under the same conditions as in Example 1. A composition ratio of the catalytically active component excluding oxygen in this case was Ce = 100 and Mn = 16 in terms of atomic ratio.

Thereafter, the dry powder was uniformly leveled in a calcining pan made of SUS and having a size of 30 cm × 20 cm and a depth of 4 cm so as to achieve a thickness of 1 mm and 30 mm, and calcination was performed under the same conditions as in Example 1 to obtain precalcined powders (E3-1) and (E3-30). An element composition ratio of the obtained precalcined powders excluding oxygen was Ce = 100 and Mn = 16 in terms of atomic ratio. That is, x in the general formula (i) was 0.138.

[Example 4]

While 1,500 parts by mass of distilled water was heated to 80°C and stirred, 1,667.7 parts by mass of cerium nitrate hexahydrate was dissolved in the distilled water to obtain an aqueous solution (A1). After complete dissolution in the aqueous solution (A1) was confirmed, 206.1 parts by mass of a 50 mass% manganese nitrate aqueous solution was added in the aqueous solution (A1) to prepare an aqueous solution (B4). After confirming complete dissolution in the aqueous solution (B4), 150.2 parts by mass of ammonium nitrate was dissolved in the aqueous solution (B4) to prepare an aqueous solution (C4). The aqueous solution (C4) was sequentially mixed while being vigorously stirred, a complete dissolution state was confirmed, and then a dry powder (D4) was obtained from the aqueous solution (C4) using a spray dryer. Drying with the spray dryer was performed under the same conditions as in Example 1. A composition ratio of the catalytically active component excluding oxygen in this case was Ce = 100 and Mn = 16 in terms of atomic ratio.

Thereafter, the dry powder was uniformly leveled in a calcining pan made of SUS and having a size of 30 cm × 20 cm and a depth of 4 cm so as to achieve a thickness of 1 mm, and calcination was performed under the same conditions as in Example 1 to obtain precalcined powders (E4-1) and (E4-30). An element composition ratio of the obtained precalcined powders excluding oxygen was Ce = 100 and Mn = 16 in terms of atomic ratio. That is, x in the general formula (i) was 0.138.

[Comparative Example 1]

While 1,500 parts by mass of distilled water was heated to 80°C and stirred, 1,667.7 parts by mass of cerium nitrate hexahydrate was dissolved in the distilled water to obtain an aqueous solution (A1). After complete dissolution in the aqueous solution (A1) was confirmed, 141.1 parts by mass of manganese acetate tetrahydrate was added and dissolved in the aqueous solution (A1) to prepare an aqueous solution (B1). After complete dissolution in the aqueous solution (B1) was confirmed, 565.9 parts by mass of ammonium nitrate was dissolved in the aqueous solution (B1) to prepare an aqueous solution (C5). The aqueous solution (C5) was sequentially mixed while being vigorously stirred, a complete dissolution state was confirmed, and then a dry powder (D5) was obtained from the aqueous solution (C5) using a spray dryer. Drying with the spray dryer was performed under the same conditions as in Example 1. A composition ratio of the catalytically active component excluding oxygen in this case was Ce = 100 and Mn = 16 in terms of atomic ratio.

Thereafter, the dry powder was uniformly leveled in a calcining pan made of SUS and having a size of 30 cm × 20 cm and a depth of 4 cm so as to achieve a thickness of 1 mm and 30 mm, and calcination was performed under the same conditions as in Example 1 to obtain precalcined powders (E5-1) and (E5-30). An element composition ratio of the obtained precalcined powders excluding oxygen was Ce = 100 and Mn = 16 in terms of atomic ratio. That is, x in the general formula (i) was 0.138.

[Comparative Example 2]

While 1,500 parts by mass of distilled water was heated to 80°C and stirred, 1,667.7 parts by mass of cerium nitrate hexahydrate was dissolved in the distilled water to obtain an aqueous solution (A1). After complete dissolution in the aqueous solution (A1) was confirmed, 137.9 parts by mass of a 50 mass% manganese nitrate aqueous solution was added in the aqueous solution (A1) to prepare an aqueous solution (B6). After confirming complete dissolution in the aqueous solution (B6), 580.6 parts by mass of ammonium nitrate was dissolved in the aqueous solution (B6) to prepare an aqueous solution (C6). The aqueous solution (C6) was sequentially mixed while being vigorously stirred, a complete dissolution state was confirmed, and then a dry powder (D6) was obtained from the aqueous solution (C6) using a spray dryer. Drying with the spray dryer was performed under the same conditions as in Example 1. A composition ratio of the catalytically active component excluding oxygen in this case was Ce = 100 and Mn = 11 in terms of atomic ratio.

Thereafter, the dry powder was uniformly leveled in a calcining pan made of SUS and having a size of 30 cm × 20 cm and a depth of 4 cm so as to achieve a thickness of 1 mm and 30 mm, and calcination was performed under the same conditions as in Example 1 to obtain precalcined powders (E6-1) and (E6-30). An element composition ratio of the obtained precalcined powders excluding oxygen was Ce = 100 and Mn = 11 in terms of atomic ratio. That is, x in the general formula (i) was 0.099.

[Comparative Example 3]

While 1,500 parts by mass of distilled water was heated to 80°C and stirred, 1,667.7 parts by mass of cerium nitrate hexahydrate was dissolved in the distilled water to obtain an aqueous solution (A1). After complete dissolution in the aqueous solution (A1) was confirmed, 206.1 parts by mass of a 50 mass% manganese nitrate aqueous solution was added in the aqueous solution (A1) to prepare an aqueous solution (B4). After confirming complete dissolution in the aqueous solution (B4), 580.6 parts by mass of ammonium nitrate was dissolved in the aqueous solution (B4) to prepare an aqueous solution (C7). The aqueous solution (C7) was sequentially mixed while being vigorously stirred, a complete dissolution state was confirmed, and then a dry powder (D7) was obtained from the aqueous solution (C7) using a spray dryer. Drying with the spray dryer was performed under the same conditions as in Example 1. A composition ratio of the catalytically active component excluding oxygen in this case was Ce = 100 and Mn = 16 in terms of atomic ratio.
Thereafter, the dry powder was uniformly leveled in a calcining pan made of SUS and having a size of 30 cm × 20 cm and a depth of 4 cm so as to achieve a thickness of 1 mm and 30 mm, and calcination was performed under the same conditions as in Example 1 to obtain precalcined powders (E7-1) and (E7-30). An element composition ratio of the obtained precalcined powders excluding oxygen was Ce = 100 and Mn = 16 in terms of atomic ratio. That is, x in the general formula (i) was 0.138.

[Comparative Example 4]

While 1,500 parts by mass of distilled water was heated to 80°C and stirred, 1,667.7 parts by mass of cerium nitrate hexahydrate was dissolved in the distilled water to obtain an aqueous solution (A1). After complete dissolution in the aqueous solution (A1) was confirmed, 141.1 parts by mass of manganese acetate tetrahydrate was added and dissolved in the aqueous solution (A1) to prepare an aqueous solution (B1). After complete dissolution in the aqueous solution (B1) was confirmed, an aqueous solution (C8) was prepared without using ammonium nitrate. The aqueous solution (C8) was sequentially mixed while being vigorously stirred, a complete dissolution state was confirmed, and drying was attempted using a spray dryer. Drying with the spray dryer was performed under the same conditions as in Example 1. However, in this case, a component to be dried remarkably adhered to an inside of the spray dryer, and a dried product could not be obtained.

[Evaluation]

Regarding the dissimilar metal-doped cerium oxide obtained in Examples 1 to 4 and Comparative Examples 1 to 3, the particle shape, D10, D50 (median diameter), D90, the non-uniformity of the particle size distribution, and the minimum flow rate were measured, and evaluated according to the following criteria.

<Particle shape>

Observation using a microscope LASERMICRO SCOPE VK-X1000 (manufactured by KEYENCE) was performed, and the evaluation was performed according to the following criteria. Results are shown in Table 1. In the state where the particles were uniformly leveled so as not to overlap, measurement was performed at a magnification of 20 times, the total number of spherical particles on a screen was compared with the number of broken particles, and calculation was performed according to the following calculation formula. In Table 1, evaluation results when calcination was performed so as to achieve a thickness of 30 mm are shown.

$$\text{Spherical particle residual ratio (\%) = number of spherical particle on screen/total}$$
$$\text{number of particle on screen} \times 100$$

(Determination Criteria)

A The residual ratio of the spherical particles having a particle diameter of 20μm to 100 μm is 90% to 100%.

B The residual ratio of the spherical particles having a particle diameter of 20μm to 100 μm is 70% to 89%.
C The residual ratio of the spherical particles having a particle diameter of 20μm to 100 μm is 50% to 69%.
D The residual ratio of the spherical particles having a particle diameter of 20μm to 100 μm is 0% to 49%.

<Particle Diameter According to Cumulative Volume Fraction>

Measurement was performed under a wet condition using LMS-2000e USER manufactured by Seishin Enterprise Co., Ltd, and D50 (a particle diameter at which the cumulative volume fraction was 50%) in an obtained volume distribution was defined as the median diameter. In addition, D10 (a particle diameter at which the cumulative volume fraction is 10%), D50, and D90 (a particle diameter at which the cumulative volume fraction is 90%) obtained in the same manner are shown in Table 1.

<Non-uniformity of Particle Size Distribution>

Using the median diameter (D50), the non-uniformity of the particle size distribution was evaluated by the following formula (5). This value is a value obtained by comparing any particle diameter with a scale of a width of the volume distribution.

$$\text{Non-uniformity} = |(D90)\text{-}(D10)|/D50 \qquad (5)$$

The unit of the particle diameter to be used is μm.
Under conditions of the examples of the present application, the dissimilar metal-doped cerium oxide had a non-uniformity represented by the formula (5) of 0.80 or more. Although various metal oxide particles were prepared at the same time in the same device and under the same conditions, the non-uniformity cannot fall below the lower limit. It is considered that a separate improvement is necessary to produce the dissimilar metal-doped cerium oxide at a lower limit of the non-uniformity of less than 0.80. For example, an improvement in equipment such as an improvement in a sprayer portion of a spray drying device is considered.

<Minimum Flow Rate>

A device was prepared in which 4.2 cc of each sample was held in a cylindrical pipe having an inner diameter of 25 mm (a lower portion was connected to a gas pipe, and an upper portion was open), and in which nitrogen gas was gradually flowed from the lower portion. A manometer was installed before and after a sample charging position of a gas flowing device simulating the fluidized bed, and an inflow rate of nitrogen gas and a differential pressure at the inflow rate were measured at a normal temperature of 25°C to 28°C. The differential pressure when the inflow of nitrogen gas was 0 cc/min (standard state) was set to 0 kPa, and the flow rate of nitrogen was increased. Typically, the differential pressure gradually tends to increase as the flow rate of the introduced gas increases. However, the differential pressure tends to rapidly decrease at the moment when the sample is pushed up by a gas flow of the introduced gas and nitrogen easily passes through the sample. The flow rate of nitrogen at this moment is referred to as the minimum flow rate. The lower index value equates to the higher fluidity. It is known that a high fluidity is advantageous in terms of cost related to operation of the fluidized bed device as the device can operate with a low amount of blown gas or a low gas pressure required for the flow. The minimum flow rate, a sample weight, and a sample weight per minimum flow rate in each example are shown in Table 1. In the measurement, a manometer capable of measuring in units of 0.01 kPa was used, and the minimum flow rate was measured with a threshold value when the flow rate of nitrogen gas was increased by 1 cc/min, the differential pressure was changed from increasing to decreasing, and a decrease of 0.02 kPa or more was observed from the previous record.

<Bulk Specific Gravity Measurement>

The bulk specific gravity was calculated by charging a sample into a measuring cylinder having a capacity of 10 cc, applying a vibration to the measuring cylinder to charge a 4.2 cc sample densely such that there is no void, and then measuring the charged weight.

<Presence of Adhesion in Spray Device>

Every time the spray drying was completed, adhesion inside the spray device was observed, an adhered material was scraped off and measured. When 5% or more of adhesion was observed with respect to a total weight of the solid content of the charged raw material, it was determined that the adhesion was present.

<Amount of Recovered Dried Product/Charged Raw Material>

Numerical values obtained by dividing a weight recovered in the drying step by a total weight of the solid content of the raw material excluding hydration water in the used charged raw material were shown. When the same raw material is used, the yield increases as the numerical value increases.

[Table 1]

| | | Unit | Example 1 | Example 2 | Example 3 | Example 4 | Comparative Example 1 | Comparative Example 2 | Comparative Example 3 |
|---|---|---|---|---|---|---|---|---|---|
| Characteristic | D10 | μm | 27.18 | 25.80 | 23.40 | 26.02 | 6.23 | 1.19 | 5.81 |
| | D50 | μm | 49.22 | 45.08 | 58.08 | 52.53 | 78.21 | 47.54 | 76.25 |
| | D90 | μm | 86.37 | 75.64 | 109.16 | 93.01 | 176.51 | 129.57 | 184.10 |
| | Non-uniformity Value calculated by formula (1) | - | 1.20 | 1.11 | 1.48 | 1.28 | 2.18 | 2.70 | 2.34 |
| | Bulk specific gravity | g/cc | 1.05 | 0.76 | 0.60 | 0.69 | 0.50 | 0.50 | 0.43 |
| Production method | Amount of substance of Ce in raw material (a) | mol | 3.8 | 3.8 | 3.8 | 3.8 | 3.8 | 3.8 | 3.8 |
| | Metal salt other than Ce in raw material | - | manganese acetate | manganese acetate | manganese acetate | manganese nitrate | manganese acetate | manganese nitrate | manganese nitrate |
| | Amount of substance of metal other than Ce in raw material (b) | mol | 0.6 | 0.6 | 0.6 | 0.6 | 0.6 | 0.4 | 0.6 |
| | Moisture-proof agent | - | ammonium nitrate | ammonium nitrate | ammonium nitrate | ammonium nitrate | ammonium nitrate | ammonium nitrate | ammonium nitrate |
| | Amount of substance of moisture-proof agent (c) | mol | 1.9 | 3.0 | 4.2 | 1.9 | 7.1 | 7.1 | 7.3 |
| | (a+b)/c | - | 2.32 | 1.47 | 1.05 | 2.32 | 0.62 | 0.59 | 0.6 |
| | b/c | - | 0.32 | 0.20 | 0.14 | 0.32 | 0.085 | 0.056 | 0.082 |

| | | Unit | Example 1 | Example 2 | Example 3 | Example 4 | Comparative Example 1 | Comparative Example 2 | Comparative Example 3 |
|---|---|---|---|---|---|---|---|---|---|
| Effect | Weight of 4.2 cc | g/cc | 4.4 | 3.2 | 2.5 | 2.9 | 2.1 | 2.1 | 1.8 |
| | N2 Minimum flow rate | cc/min | 22 | 27 | 27 | 24 | 27 | 100 | 105 |
| | Sample weight/ minimum flow rate | g min/cc | 0.2 | 0.12 | 0.09 | 0.12 | 0.08 | 0.02 | 0.02 |
| | Spherical particle residual ratio after main firing | % | A | A | A | A | B | C | D |
| | Amount of recovered dried product/ charged raw material | % | 55.2 | 54.2 | 59.7 | 23.3 | 27.1 | 29.9 | 37.3 |
| | Presence of adhesion in spray | - | No | No | No | Yes | Yes | Yes | Yes |

Although the present invention has been described in detail with reference to specific examples, it is clear to a person skilled in the art that various alterations and modifications can be added without departing from the spirit and the scope of the present invention.

The present application is based on a Japanese patent application (Japanese Patent Application No. 2020-057649) filed on March 27, 2020, and the entire application is incorporated by reference. In addition, all references cited herein are entirely incorporated.

INDUSTRIAL APPLICABILITY

The dissimilar metal-doped cerium oxide of the present invention has a large sample weight per minimum flow rate, and is very advantageous in productivity particularly when used as a catalyst for a fluidized bed. In addition, the production method of the present invention capable of realizing this characteristic allows uniform particles having a small particle size distribution to be produced at low cost and with high efficiency.

**Claims**

1. A dissimilar metal-doped cerium oxide comprising:

   cerium oxide and a dissimilar metal other than the cerium oxide,
   wherein the dissimilar metal-doped cerium oxide satisfies a relationship of the following formula (1):

$$0.8 \leq |(D90)\text{-}(D10)|/D50 \leq 2.0 \quad (1)$$

   where, in the formula (1), D10, D50, and D90 respectively represent the following:

   D10: particle diameter at which cumulative volume fraction is 10%
   D50: particle diameter at which cumulative volume fraction is 50%
   D90: particle diameter at which cumulative volume fraction is 90%.

2. A dissimilar metal-doped cerium oxide comprising:

   cerium oxide and a dissimilar metal other than the cerium oxide,
   wherein a bulk specific gravity is 0.51 g/cc or more and 1.50 g/cc or less.

3. The dissimilar metal-doped cerium oxide according to claim 1 or 2,
   wherein D10 is 20 $\mu$m or more and 40 $\mu$m or less.

4. The dissimilar metal-doped cerium oxide according to any one of claims 1 to 3,
   wherein D90 is 60 $\mu$m or more and 120 $\mu$m or less.

5. The dissimilar metal-doped cerium oxide according to any one of claims 1 to 4,
   wherein the dissimilar metal is at least one metal selected from the group consisting of manganese (Mn), cobalt (Co), iron (Fe), and nickel (Ni).

6. A method for producing a dissimilar metal-doped cerium oxide comprising:

   (A) preparing an aqueous preparation by blending a raw material, (B) drying the aqueous preparation, and (C) calcining a dried product of the aqueous preparation,
   wherein the raw material prepared in the step (A) satisfies a relationship of the following formula (2):

$$0.65 \leq (a+b)/c \leq 8.0 \quad (2)$$

   where, in the formula (2), a to c represent the following:

   a: amount of substance of cerium (Ce) in raw material (mol)

b: amount of substance of dissimilar metal other than cerium in raw material (mol)
c: amount of substance of ammonium ion in a moisture-proof agent (mol).

7. The method for producing a dissimilar metal-doped cerium oxide according to claim 6,
   wherein the raw material prepared in the step (A) satisfies a relationship of the following formula (2'):

$$0.7 \leq (a+b)/c \leq 8.0 \quad (2').$$

8. The method for producing a dissimilar metal-doped cerium oxide according to claim 6 or 7,
   wherein the raw material prepared in the step (A) satisfies a relationship of the following formula (3):

$$0.8 \leq (a+b)/c \leq 7.0 \quad (3).$$

9. The method for producing a dissimilar metal-doped cerium oxide according to any one of claims 6 to 8,
   wherein c and b in the formula (2) or (3) satisfy a relationship of the following formula (4):

$$0.10 \leq b/c \leq 0.80 \quad (4).$$

10. The method for producing a dissimilar metal-doped cerium oxide according to any one of claims 6 to 9,
    wherein the drying in the step (B) is spray drying.

11. The method for producing a dissimilar metal-doped cerium oxide according to any one of claims 6 to 10,
    wherein an organic acid salt is used as a raw material of the dissimilar metal.

12. The method for producing a dissimilar metal-doped cerium oxide according to claim 11,
    wherein the organic acid salt is an acetate.

13. A catalyst for producing hydrogen, comprising the dissimilar metal-doped cerium oxide according to any one of claims 1 to 5.

14. A method for producing hydrogen, using the catalyst for producing hydrogen according to claim 13.

## INTERNATIONAL SEARCH REPORT

| | International application No. |
|---|---|
| | PCT/JP2021/012413 |

**A. CLASSIFICATION OF SUBJECT MATTER**
Int. Cl. C01F17/32(2020.01)i, B01J23/34(2006.01)i, C01F17/235(2020.01)i, C01G45/00(2006.01)i
FI: C01F17/32, C01F17/235, B01J23/34 M, C01G45/00

According to International Patent Classification (IPC) or to both national classification and IPC

**B. FIELDS SEARCHED**

Minimum documentation searched (classification system followed by classification symbols)
Int. Cl. C01F17/00-C01F17/38, B01J21/00-B01J38/74

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)
JSTPlus (JDreamIII), JST7580 (JDreamIII), JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2019-122895 A (NE CHEMCAT CORP.) 25 July 2019, example 1 | 1-2 |
| A | | 3-14 |
| X | JP 2011-036834 A (MAZDA MOTOR CORP.) 24 February 2011, paragraph [0042] | 1-2 |
| A | | 3-14 |
| X | JP 2011-255273 A (MAZDA MOTOR CORP.) 22 December 2011, claims, paragraphs [0037], [0038] | 1-2 |
| A | | 3-14 |
| X | CN 103754932 A (INNER MONGOLIA UNIVERSITY OF SCIENCE & TECHNOLOGY) 30 April 2014, examples 2, 3 | 1-2 |
| A | | 3-14 |
| X | JP 2015-528833 A (GRIREM ADVANCED MATERIALS CO., LTD.) 01 October 2015, examples | 1-2 |
| A | | 3-14 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21.05.2021 | 01.06.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2021/012413

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-183284 A (DOWA HOLDINGS CO., LTD.) 22 September 2011, claims, examples | 1-14 |
| A | JP 2007-245054 A (DOWA HOLDINGS CO., LTD.) 27 September 2007, claims, examples | 1-14 |
| A | JP 7-155605 A (NISSAN MOTOR CO., LTD.) 20 June 1995, claims, examples | 1-14 |

Form PCT/ISA/210 (continuation of second sheet) (January 2015)

| International application No. |
|---|
| PCT/JP2021/012413 |

| Patent Documents referred to in the Report | Publication Date | Patent Family | Publication Date |
|---|---|---|---|
| JP 2019-122895 A | 25.07.2019 | (Family: none) | |
| JP 2011-036834 A | 24.02.2011 | (Family: none) | |
| JP 2011-255273 A | 22.12.2011 | US 2011/0301025 A1 paragraphs [0043], [0044] DE 102011103496 A1 CN 102266773 A | |
| CN 103754932 A | 30.04.2014 | (Family: none) | |
| JP 2015-528833 A | 01.10.2015 | US 2015/0184027 A1 examples WO 2014/071859 A1 CN 103382369 A KR 10-2015-0020603 A | |
| JP 2011-183284 A | 22.09.2011 | (Family: none) | |
| JP 2007-245054 A | 27.09.2007 | (Family: none) | |
| JP 7-155605 A | 20.06.1995 | (Family: none) | |

Form PCT/ISA/210 (extra sheet) (January 2015)

**EP 4 112 554 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003514745 A
- JP 3793802 B
- JP 2007153731 A
- JP 2010089989 A
- JP 2020057649 A